# FASCICULE DE BREVET EUROPEEN

(11) **EP 4 051 590 B1**
(45) Date de publication et mention de la délivrance du brevet: **12.02.2025**
(21) Numéro de dépôt: 20792670.0
(22) Date de dépôt: 22.10.2020
(51) Int. Cl.: B64D 11/06

(54) **PALETTE SUPPORT POUR UNE UNITE DE SIEGE D'AVION**
STÜTZPLATTE FÜR FLUGZEUGSITZEINHEIT
SUPPORT PLATE FOR AIRCRAFT SEATING UNIT

(30) Priorité: 31.10.2019 FR 1912243
(43) Date de publication de la demande: 07.09.2022
(73) Titulaire: Safran Seats, 78370 Plaisir (FR)
(72) Inventeur: BONNEFOY, Bastien, 77550 Moissy-Cramayel (FR); LIGONNIERE, Laurent, 77550 Moissy-Cramayel (FR); DE MORAIS, José Bernardo, 77550 Moissy-Cramayel (FR); YVON, Florent, 77550 Moissy-Cramayel (FR)
(74) Mandataire: Marconnet, Sébastien
(86) Numéro de dépôt international: PCT/EP2020/079709
(87) Numéro de publication internationale: WO 2021/083778

(56) Documents cités:
- CA-A1- 2 626 278
- US-A- 5 868 472
- US-A1- 2012 235 453
- US-A1- 2015 115 101
- US-A1- 2015 202 992
- US-A1- 2017 274 999
- US-A1- 2018 327 097
- US-B2- 7 857 259

## Description

La présente invention porte sur une palette support pour une unité de siège d'avion. L'invention trouve une application particulièrement avantageuse, mais non exclusive, avec les unités de sièges d'avion de type classe affaire. Par "unité de siège", on entend le siège en tant que tel, ainsi que tous les éléments associés au siège, par exemple un accoudoir, une console, une coque d'intimité, ou autre.

Une palette support pour unité de siège est une pièce d'interface assurant une liaison mécanique entre les rails de l'avion et au moins un élément de l'unité de siège, tel que la structure d'assise.

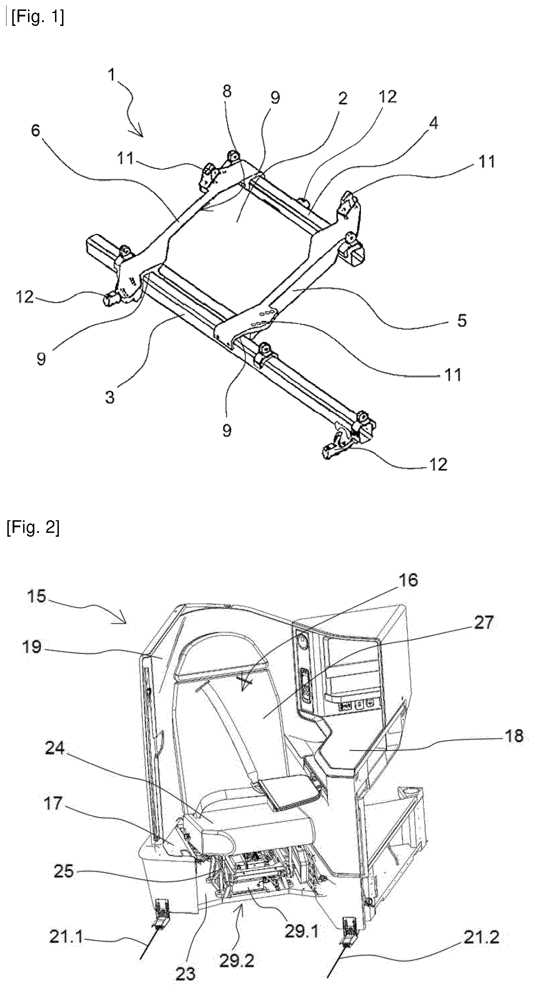

Comme cela est représenté sur la figure 1, une palette support 1 pour unité de siège d'avion comporte, de façon connue en soi, un panneau de renfort 2 ainsi qu'une traverse avant 3 et une traverse arrière 4 situées de part et d'autre du panneau de renfort 2. Les traverses 3 et 4 sont généralement constituées par des poutres.

L'assemblage de cet ensemble est réalisé au moyen de deux longerons 5, 6 munis chacun d'une gorge 8 recevant un bord du panneau de renfort 2. La fixation entre chaque longeron 5, 6 et le panneau 2 est réalisé par exemple par rivetage. En outre, un longeron 5, 6 comporte à chacune de ses extrémités un logement 9 pour recevoir respectivement la traverse avant 3 et la traverse arrière 4. La fixation des traverses 3, 4 aux longerons 5, 6 est réalisée par exemple au moyen de boulons ou tout autre dispositif de fixation adapté.

La palette support 1 comporte en outre des moyens de fixation 11 avec le siège et une coque d'intimité associée. La palette 1 est également équipée de moyens de fixation avec des verrous 12 assurant la liaison mécanique entre la palette 1 et les rails s'étendant le long du plancher de la cabine d'avion.

Toutefois, une telle configuration est encombrante notamment en hauteur compte tenu de l'épaisseur importante des traverses 3, 4. Par ailleurs, le fait d'utiliser des éléments réalisés dans différents matériaux (le panneau 2 est réalisé dans un matériau composite tandis que les traverses 3, 4 et les longerons 5, 6 sont réalisés dans différents matériaux métalliques) oblige à adapter les interfaces de fixation avec les différents composants, ce qui rend le montage de l'ensemble complexe. Il est à noter également que le montage des verrous 12 est figé du fait de leur positionnement sur deux traverses 3, 4 parallèles l'une par rapport à l'autre. Un tel agencement limite donc la possibilité d'intégrer des composants sous le siège d'avion.

Le document US2015115101 décrit un ensemble de liaison au sol pour la liaison mécanique d'un siège d'avion à une structure de plancher d'un avion. L'ensemble de liaison au sol peut être fixé sur au moins trois points de fixation avec respectivement un élément de fixation à la structure du plancher.

Le document US2017/274999 décrit un organe de connexion extensible permettant de fixer un siège passager à un plancher de cabine ou à une structure de support. Des nervures peuvent être réalisées de part et d'autre d'un pied de siège fixé à l'organe de connexion.

Le document US5868472 décrit un cadre de siège d'avion comprenant une partie dossier de siège comportant une paire de rails latéraux fixés à une partie structurelle de siège de façon à y transférer une charge. Des nervures peuvent être réalisées notamment de part et d'autre d'éléments structurels formant la partie dossier de siège.

Le document US2015202992 décrit un ensemble de cadre de base pour un siège passager comprenant un cadre principal avec une structure de support de siège et une structure de support latérale. La structure de support latérale comprend deux ferrures de siège et la structure de support de siège comprend un raccord de siège et un cadre secondaire couplé de manière pivotante au cadre principal. Un siège passager et un monument environnant sont montés sur l'ensemble de cadre de base.

Le document US7857259 décrit un système de siège modulaire pour un habitacle d'un véhicule, en particulier d'un avion, avec au moins un siège qui comprend une unité de siège avec un élément d'assise et un dossier de siège, un cadre de siège avec au moins une paire d'éléments de support essentiellement verticaux, à l'extrémité supérieure de laquelle est disposée une structure portante sur laquelle repose l'unité de siège et une structure de fixation dans le plancher de l'habitacle avec au moins deux rails longitudinaux, qui ont un espacement prédéterminé l'un par rapport à l'autre, pour recevoir les extrémités inférieures de l'unité de siège.

Le document US2018327097 décrit un dispositif de fixation pour un composant qui peut être fixé sur des rails d'une structure de plancher d'un intérieur d'avion comprenant au moins deux plaques d'adaptation. Les plaques d'adaptation sont découplées les unes des autres et configurées pour être fixées sur les rails. Les plaques d'adaptation sont configurées pour fixer le composant ayant des attaches de fixation mutuellement espacées.

Les documents US2012/235453A1 et CA2626278A1 décrivent chacun un siège comprenant une palette de support comprenant des nervures de rigidification disposées sur une face (inférieure), l'autre face étant lisse.

L'invention vise à remédier efficacement à au moins un des inconvénients précités en proposant une palette support pour une unité de siège d'avion selon la revendication 1. Des modes de réalisation préférés sont définis dans les revendications dépendantes.

De façon générale, la palette support comporte:
- un corps comportant une face supérieure et une face inférieure,
- des moyens de fixation de verrou ménagés chacun dans une portion du corps, les moyens de fixation de verrou permettant d'assurer chacun une fixation entre le corps et un verrou de rail de siège ou avec une pièce intermédiaire de liaison établissant une liaison entre le corps et un verrou,
- des moyens de fixation d'unité de siège ménagés chacun dans une portion du corps, les moyens de fixation d'unité de siège permettant chacun d'assurer une fixation entre le corps et un élément de l'unité de siège,
- les portions du corps comportant les moyens de fixation de verrou et les portions du corps comportant les moyens de fixation d'unité de siège, ainsi que le reste du corps constituant une pièce unique monobloc,
- la palette support comportant en outre des nervures de rigidification disposées sur la face inférieure de son corps,
- la face supérieure du corps étant lisse.

La palette support de l'invention se distingue par les caractéristiques suivantes:
- les nervures de rigidification s'étendent suivant des chemins d'efforts entre les moyens de fixation de verrou apparaissant lors d'un test dynamique de résistance mécanique consistant en une déformation du plancher de l'avion alors que la palette support est montée sur des rails et au cours duquel une contrainte est imprimée à un des rails de manière à le faire descendre d'un angle de 10 degrés vers le bas et une autre contrainte est imprimée à l'autre rail de manière à le faire pivoter d'un angle de 10 degrés.

L'invention permet ainsi de réaliser une palette support pour unité de siège de faible épaisseur plus compacte qu'une palette support selon l'état de la technique. En outre, du fait de la suppression des poutres, l'invention procure une grande liberté de positionnement des moyens de fixation de verrou, ce qui permet de libérer de l'espace sous le siège. La réalisation de la palette support en une pièce monobloc qui est donc réalisée en un seul matériau facilite également les interfaçages de la palette support avec les différents composants de l'unité de siège.

Selon une réalisation, ladite palette support comporte en outre des nervures de rigidification.

Selon une réalisation, les nervures de rigidification s'étendent suivant des chemins d'efforts entre les moyens de fixation de verrou apparaissant lors d'un test dynamique de résistance mécanique.

Selon une réalisation, les nervures de rigidification sont disposées sur la face inférieure du corps de la palette support.

Selon une réalisation, ladite palette support comporte trois moyens de fixation de verrou.

Selon une réalisation, ladite palette support comporte un premier moyen de fixation de verrou et un deuxième moyen de fixation de verrou situés d'un premier côté du corps et un troisième moyen de fixation de verrou situé d'un deuxième côté du corps.

Selon une réalisation, le troisième moyen de fixation de verrou est décalé longitudinalement par rapport à une première droite perpendiculaire à une direction longitudinale passant par le premier moyen de fixation de verrou et par rapport à une deuxième droite perpendiculaire à une direction longitudinale passant par le deuxième moyen de fixation de verrou, de sorte que le troisième moyen de fixation de verrou se situe longitudinalement entre le premier moyen de fixation de verrou et le deuxième moyen de fixation de verrou.

Selon une réalisation, au moins un évidement traversant est ménagé dans le corps.

Selon une réalisation, la face supérieure du corps est lisse.

Selon une réalisation, la face supérieure du corps comporte des zones d'indexage pour faciliter le positionnement d'un élément de l'unité de siège par rapport aux moyens de fixation d'unité de siège.

Selon une réalisation, la pièce unique monobloc est réalisée dans un matériau métallique, notamment en aluminium.

L'invention a également pour objet un ensemble comportant au moins une unité de siège et une palette support pour unité de siège telle que précédemment définie.

L'invention concerne en outre un avion comportant un ensemble tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1, déjà décrite, est une vue en perspective d'une palette support pour unité de siège selon l'état de la technique;
[Fig. 2] La figure 2 est une vue en perspective d'une unité de siège montée sur une palette support selon la présente invention;
[Fig. 3] [Fig. 4] La figure 3 et la figure 4 sont des vues en perspective suivant différents angles de l'unité de siège et de la palette support selon la présente invention;
[Fig. 5] La figure 5 est une vue de dessous de l'unité de siège et de la palette support selon la présente invention;
[Fig. 6a] La figure 6a est une vue en perspective de la palette support pour unité de siège selon la présente invention;
[Fig. 6b] La figure 6b est une vue de dessous de la palette support pour unité de siège selon la présente invention;
[Fig. 7] La figure 7 est une cartographie des contraintes mécaniques subies par la palette support pour unité de siège selon l'invention lors d'un test dynamique d'effort.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Les figures 2, 3, et 4 montrent une unité de siège 15 comportant un siège 16 associé à un accoudoir amovible 17 et à une console 18 munie d'une coque 19. Cet ensemble d'éléments est destiné à être fixé sur les rails 21.1, 21.2 d'un avion par l'intermédiaire d'une palette support pour unité de siège 23. Le siège 16 comporte notamment une assise 24 associée à une structure d'assise 25 ainsi qu'un dossier 27 mobile par rapport à l'assise 24. Le siège 16 est fixé sur la palette support 23 par l'intermédiaire de la structure d'assise 25.

Plus précisément, la palette support 23 comporte un corps 28 ayant une face supérieure 29.1 et une face inférieure 29.2.

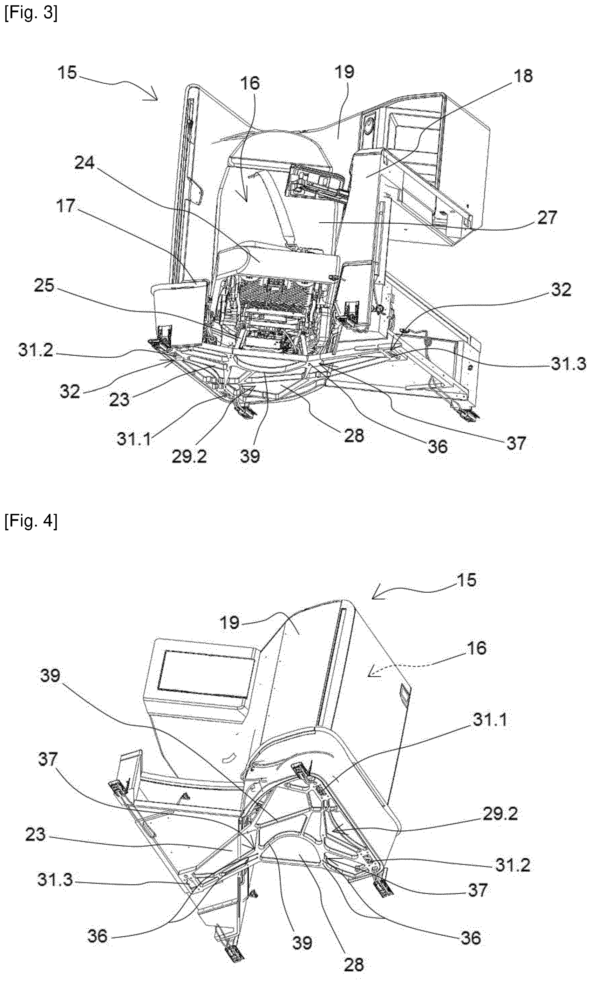

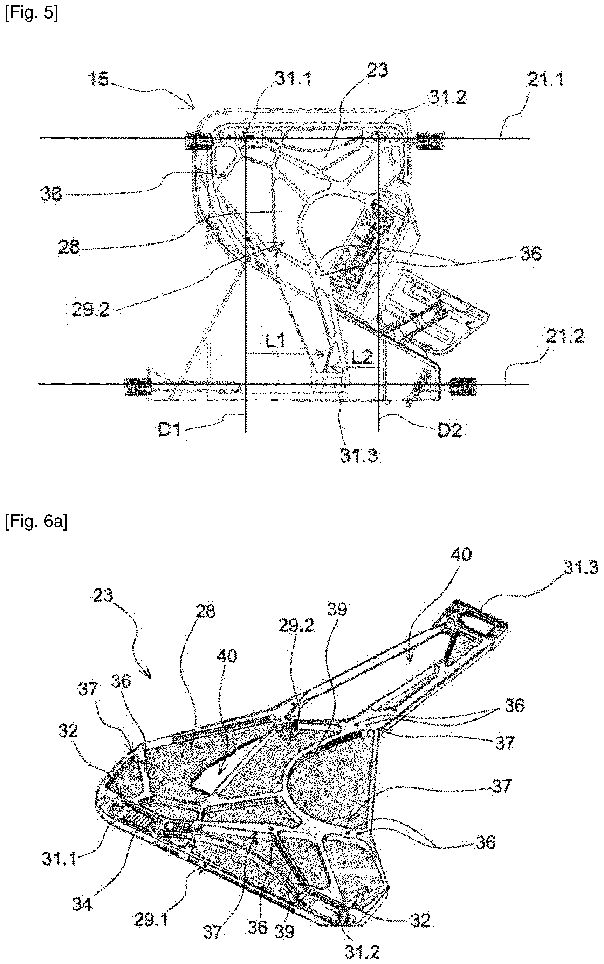

Tel qu'on peut le voir sur les figures 3 et 4, des moyens de fixation de verrou 31.1, 31.2, 31.3 sont ménagés chacun dans une portion 32 du corps 28. Les moyens de fixation de verrou 31.1, 31.2, 31.3 permettent d'assurer chacun une fixation avec une pièce intermédiaire de liaison 34 représentée sur la figure 6a établissant une liaison entre le corps 28 et un verrou. En l'occurrence, les moyens de fixation de verrou 31.1, 31.2, 31.3 sont constitués par des ouvertures permettant la fixation de la pièce intermédiaire de liaison 34. En variante, les moyens de fixation de verrou 31.1, 31.2, 31.3 permettent d'assurer une fixation directe entre le corps 28 et un verrou de rail de siège correspondant.

En outre, des moyens de fixation d'unité de siège 36 sont ménagés chacun dans une portion 37 du corps 28. Les moyens de fixation d'unité de siège 36 permettent d'assurer une fixation entre le corps 28 et un élément de l'unité de siège 15. En l'occurrence, les moyens de fixation d'unité de siège 36 sont constitués chacun par une ouverture taraudée ménagée dans la face supérieure 29.1 du corps 28. Une ouverture taraudée est destinée à recevoir un organe de fixation, tel qu'une vis, assurant la fixation entre un élément de l'unité de siège 15 et la palette support 23. L'élément de l'unité de siège 15 à fixer sur le corps 28 pourra être le siège 16 en tant que tel via la structure d'assise 25, ou tout élément disposé autour du siège 16, comme par exemple l'accoudoir 17 et/ou la console 18 et/ou la coque 19. Il sera également possible de fixer un boîtier électronique sur la palette support 23.

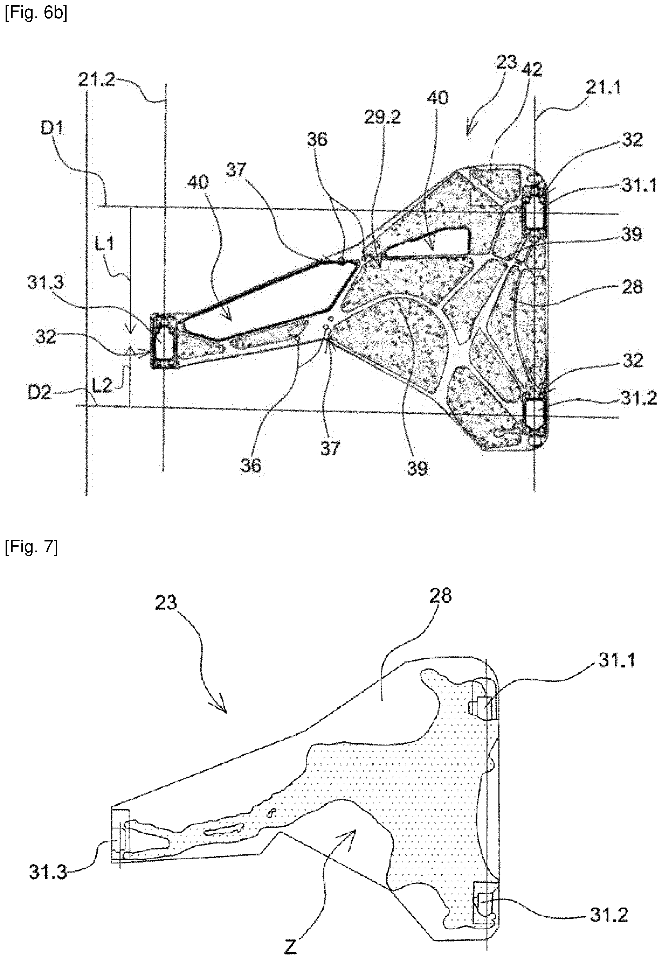

Les portions 32 du corps 28 de la palette support 23 comportant les moyens de fixation de verrou 31.1, 31.2, 31.3 et les portions 37 du corps 28 de la palette support 23 comportant les moyens de fixation d'unité de siège 36 ainsi que le reste du corps 28 de la palette support 28 constituent une pièce unique monobloc, tel que cela ressort clairement des figures 6a et 6b.

Autrement dit, il existe une continuité de matière entre les portions 32 du corps 28 de la palette comportant les moyens de fixation de verrou 31.1, 31.2, 31.3, les portions 37 du corps 28 de la palette comportant les moyens de fixation d'unité de siège 36, et le reste du corps 28 s'étendant entre ces différentes portions 32, 37.

La pièce unique monobloc constituant la palette support 23 est réalisée de préférence dans un matériau métallique, notamment en aluminium. En variante, la pièce pourrait être réalisée dans un autre matériau métallique, par exemple en acier ou en magnésium. La pièce monobloc est réalisée de préférence par usinage dans la masse ou par impression 3D.

Selon l'invention, la face supérieure 29.1 du corps 28 est lisse, tandis que des nervures de rigidification 39 sont disposées sur la face inférieure 29.2 du corps 28 de la palette support 23.

La figure 7 montre une répartition des efforts subis par la palette support 23 lors d'un test dynamique de résistance mécanique. Ce test de résistance mécanique consiste en une déformation du plancher de l'avion alors que la palette support 23 est montée sur les rails 21.1, 21.2. Au cours de ce test dit de type "pitch and roll" en anglais, une contrainte est imprimée à un des rails 21.1, 21.2 de manière à le faire descendre d'un angle donné, par exemple de l'ordre de 10 degrés vers le bas, et une autre contrainte est imprimée à l'autre rail 21.1, 21.2 de manière à le faire pivoter d'un angle donné, par exemple de l'ordre de 10 degrés.

Selon l'invention, les nervures de rigidification 39 s'étendent suivant des chemins d'efforts entre les moyens de fixation de verrou 31.1, 31.2, 31.3 apparaissant dans la zone Z lors du test de résistance mécanique.

Avantageusement, la palette support 23 est de type à "trois points de fixation", c'est-à-dire qu'elle comporte trois moyens de fixation de verrou 31.1, 31.2, 31.3.

Un premier moyen de fixation de verrou 31.1 et un deuxième moyen de fixation de verrou 31.2 sont situés d'un premier côté du corps 28. Les moyens de fixation de verrou 31.1 et 31.2 sont alignés longitudinalement l'un par rapport à l'autre. Par "aligné longitudinalement", on entend le fait que le premier moyen de fixation de verrou 31.1 et le deuxième moyen de fixation de verrou 31.2 se situent tous deux sur la même droite suivant laquelle s'étend un rail 21.1, 21.2.

On entend par "direction longitudinale" la direction d'allongement des rails 21.1, 21.2 de l'avion ou une direction parallèle à la direction d'allongement des rails 21.1, 21.2 de l'avion. Le premier et le deuxième moyens de fixation 31.1, 31.2 portent chacun un verrou destiné à coopérer avec le premier rail 21.1.

Un troisième moyen de fixation de verrou 31.3 est situé d'un deuxième côté du corps 28 opposé au premier côté portant le premier et le deuxième moyens de fixation 31.1, 31.2. Le troisième moyen de fixation de verrou 31.3 porte un verrou destiné à coopérer avec le deuxième rail 21.2.

Comme on peut le voir sur les figures 5 et 6b, le troisième moyen de fixation de verrou 31.3 est décalé longitudinalement par rapport à une première droite D1 perpendiculaire à une direction longitudinale passant par le premier moyen de fixation de verrou 31.1 (cf. décalage L1) et par rapport à une deuxième droite D2 perpendiculaire à une direction longitudinale passant par le deuxième moyen de fixation de verrou 31.2 (cf. décalage L2), de sorte que le troisième moyen de fixation de verrou 31.3 se situe longitudinalement entre le premier moyen de fixation de verrou 31.1 et le deuxième moyen de fixation de verrou 31.2.

Le troisième moyen de fixation de verrou 31.3 n'est pas aligné avec le premier moyen de fixation de verrou 31.1 et le deuxième moyen de fixation de verrou 31.2.

Comme on peut le voir sur les figures 6a et 6b, au moins un évidement traversant 40 est ménagé dans le corps 28 de la palette. Cet évidement 40 est réalisé dans une zone du corps 28 soumise à des contraintes faibles lors du test dynamique. Cet évidement 40 permet de réduire le poids de la palette support 23. Le cas échéant, cet évidement 40 pourra permettre le passage de fils électriques issus d'un faisceau électrique de l'avion et destinés à être connectés sur un boîtier électrique disposé à proximité du siège. Le boîtier électrique pourra être fixé sur la face supérieure 29.1 du corps 28.

Suivant certains modes de réalisation, la face supérieure 29.1 du corps 28 de la palette support 23 comporte des zones d'indexage 42 pour faciliter le positionnement d'un élément de l'unité de siège 15 par rapport aux moyens de fixation d'unité de siège 36, tel que cela est illustré par la figure 6b.

Ces zones d'indexage 42 pourront consister par exemple en des creux réalisés dans la face supérieure 29.1 pour guider l'élément de l'unité de siège 15, de sorte que les trous de fixation de l'élément de l'unité de siège 15 se situent en face des trous taraudés des moyens 36. Alternativement, les zones d'indexage 42 pourront être constituées par des murets de guidage issus de la face supérieure 29.1 du corps 28.

En variante, la palette support 23 pourra comporter plus de trois points de fixation, notamment quatre points de fixation ou plus.

En variante, les moyens de fixation 31.1, 31.2, 31.3, 36 sont constitués par des portions en saillie du corps 28 de la palette support 23.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

Bien évidemment, l'invention n'est pas limitée aux modes de réalisation décrits précédemment et fournis uniquement à titre d'exemple, mais uniquement par les revendications annexées.

## Revendications

1. Palette support (23) pour une unité de siège (15) d'avion comportant:
- un corps (28) comportant une face supérieure (29.1) et une face inférieure (29.2),
- des moyens de fixation de verrou (31.1, 31.2, 31.3) ménagés chacun dans une portion (32) du corps (28), les moyens de fixation de verrou (31.1, 31.2, 31.3) permettant d'assurer chacun une fixation entre le corps (28) et un verrou de rail de siège ou avec une pièce intermédiaire de liaison (34) établissant une liaison entre le corps (28) et un verrou,
- des moyens de fixation d'unité de siège (36) ménagés chacun dans une portion (37) du corps (28), les moyens de fixation d'unité de siège (36) permettant chacun d'assurer une fixation entre le corps (28) et un élément de l'unité de siège (15),
- les portions (32) du corps (28) comportant les moyens de fixation de verrou (31.1, 31.2, 31.3) et les portions (37) du corps (28) comportant les moyens de fixation d'unité de siège (36), ainsi que le reste du corps (28) constituant une pièce unique monobloc,
- ladite palette support comportant en outre des nervures de rigidification (39) disposées sur la face inférieure (29.2) du corps (28),
- la face supérieure (29.1) du corps (28) étant lisse,
**caractérisée en ce que**
- les nervures de rigidification (39) s'étendent suivant des chemins d'efforts entre les moyens de fixation de verrou (31.1, 31.2, 31.3) apparaissant lors d'un test dynamique de résistance mécanique consistant en une déformation du plancher de l'avion alors que la palette support (23) est montée sur des rails (21.1, 21.2) et au cours duquel une contrainte est imprimée à un des rails (21.1, 21.2) de manière à le faire descendre d'un angle de 10 degrés vers le bas et une autre contrainte est imprimée à l'autre rail (21.1, 21.2) de manière à le faire pivoter d'un angle de 10 degrés.

2. Palette support selon la revendication 1, **caractérisée en ce qu'**elle comporte trois moyens de fixation de verrou (31.1, 31.2, 31.3).

3. Palette support selon la revendication 2, **caractérisée en ce qu'**elle comporte un premier moyen de fixation de verrou (31.1) et un deuxième moyen de fixation de verrou (31.2) situés d'un premier côté du corps (28) et un troisième moyen de fixation de verrou (31.3) situé d'un deuxième côté du corps (28).

4. Palette support selon la revendication 3, **caractérisée en ce que** le troisième moyen de fixation de verrou (31.3) est décalé longitudinalement par rapport à une première droite (D1) perpendiculaire à une direction longitudinale passant par le premier moyen de fixation de verrou (31.1) et par rapport à une deuxième droite (D2) perpendiculaire à une direction longitudinale passant par le deuxième moyen de fixation de verrou (31.2), de sorte que le troisième moyen de fixation de verrou (31.3) se situe longitudinalement entre le premier moyen de fixation de verrou (31.1) et le deuxième moyen de fixation de verrou (31.2).

5. Palette support selon l'une quelconque des revendications 1 à 4, **caractérisée en ce qu'**au moins un évidement traversant (40) est ménagé dans le corps (28).

6. Palette support selon l'une quelconque des revendications 1 à 5, **caractérisée en ce que** la face supérieure (29.1) du corps (28) comporte des zones d'indexage (42) pour faciliter le positionnement d'un élément de l'unité de siège par rapport aux moyens de fixation d'unité de siège (36).

7. Palette support selon l'une quelconque des revendications 1 à 6, **caractérisée en ce que** la pièce unique monobloc est réalisée dans un matériau métallique, notamment en aluminium.

8. Ensemble comportant au moins une unité de siège (15) et une palette support (23) pour unité de siège telle que définie selon l'une quelconque des revendications précédentes.

9. Avion comportant un ensemble tel que défini selon la revendication précédente.

## Patentansprüche

1. Trägerpalette (23) für eine Flugzeugsitzeinheit (15), umfassend:
- einen Körper (28) mit einer Oberseite (29.1) und einer Unterseite (29.2),
- Schlossbefestigungsmittel (31.1, 31.2, 31.3), die jeweils in einem Abschnitt (32) des Körpers (28) vorgesehen sind, wobei die Schlossbefestigungsmittel (31.1, 31.2, 31.3) jeweils eine Befestigung des Körpers (28) und eines Sitzschienenschlosses aneinander oder mit Hilfe eines Zwischenverbindungsteils (34) eine Befestigung des Körpers (28) und eines Schlosses aneinander ermöglicht,
- Sitzeinheitsbefestigungsmittel (36), die jeweils in einem Abschnitt (37) des Körpers (28) vorgesehen sind, wobei die Sitzeinheitsbefestigungsmittel (36) jeweils einer Befestigung des Körpers (28) und eine Elements der Sitzeinheit (15) aneinander ermöglichen,
wobei
- die Abschnitte (32) des Körpers (28) die Schlossbefestigungsmittel (31.1, 31.2, 31.3) umfassen, und die Abschnitte (37) des Körpers (28) die Sitzeinheitbefestigungsmittel (36) umfassen, sowie der Rest des Körpers (28) ein einzelnes Monoblockteil bilden,
- die Trägerpalette außerdem Versteifungsrippen (39) an der Unterseite (29.2) des Körpers (28) aufweist,
- die Oberseite (29.1) des Körpers (28) glatt ist,
**dadurch gekennzeichnet , dass**
- die Versteifungsrippen (39) entlang von Spannungspfaden zwischen den Schlossbefestigungsmitteln (31.1, 31.2, 31.3) verlaufen, die bei einem dynamisch-mechanischen Widerstandstest auftreten, der aus einer Verformung des Flugzeugbodens besteht, während die Trägerpalette (23) auf Schienen (21.1, 21.2) montiert ist, und bei dem auf eine der Schienen (21.1, 21.2) eine Spannung ausgeübt wird, um sie um einen Winkel von 10 Grad nach unten abzusenken, und auf die andere Schiene (21.1, 21.2) eine andere Spannung ausgeübt wird, um sie um einen Winkel von 10 Grad schwenken zu lassen.

2. Trägerpalette nach Anspruch 1, **dadurch gekennzeichnet, dass** sie drei Schlossbefestigungsmittel (31.1, 31.2, 31.3) aufweist.

3. Trägerpalette nach Anspruch 2, **dadurch gekennzeichnet, dass** sie ein erstes Schlossbefestigungsmittel (31.1) und ein zweites Schlossbefestigungsmittel (31.2) auf einer ersten Seite des Körpers (28) und ein drittes Schlossbefestigungsmittel (31.3) auf einer zweiten Seite des Körpers (28) aufweist.

4. Trägerpalette nach Anspruch 3, **dadurch gekennzeichnet, dass** das dritte Schlossbefestigungsmittel (31.3) in Bezug auf eine erste gerade Linie (D1), die senkrecht zu einer Längsrichtung durch das erste Schlossbefestigungsmittel (31.1) verläuft, und in Bezug auf eine zweite gerade Linie (D2), die senkrecht zu einer Längsrichtung durch das zweite Schlossbefestigungsmittel (31.2) verläuft, längsversetzt ist, so dass sich das dritte Schlossbefestigungsmittel (31.3) in Längsrichtung zwischen dem ersten Schlossbefestigungsmittel (31.1) und dem zweiten Schlossbefestigungsmittel (31.2) befindet.

5. Trägerpalette nach einem der Ansprüche 1 bis 4, **dadurch gekennzeichnet, dass** im Körper (28) mindestens eine durchgehende Aussparung (40) vorgesehen ist.

6. Trägerpalette nach einem der Ansprüche 1 bis 5, **dadurch gekennzeichnet, dass** die Oberseite (29.1) des Körpers (28) Indexierungszonen (42) aufweist, um die Positionierung eines Elements der Sitzeinheit relativ zu den Sitzeinheitsbefestigungsmitteln (36) zu erleichtern.

7. Trägerpalette nach einem der Ansprüche 1 bis 6, **dadurch gekennzeichnet, dass** das einzelne Monoblockteil aus einem metallischen Werkstoff, insbesondere Aluminium, besteht.

8. Anordnung mit mindestens einer Sitzeinheit (15) und einer Trägerpalette (23) für eine Sitzeinheit gemäß einem der vorhergehenden Ansprüche.

9. Flugzeug mit einer Anordnung gemäß dem vorhergehenden Anspruchs.

## Claims

1. A support pallet (23) for an aircraft seat unit (15), comprising:
- a body (28) comprising an upper face (29.1) and a lower face (29.2),
- lock fixing means (31.1, 31.2, 31.3), each of them being provided in a portion (32) of the body (28), each of the lock fixing means (31.1, 31.2, 31.3) enabling to fixing the body (28) and a seat rail lock to one another or with the help of an intermediate connecting piece (34) for fixing the body (28) and a lock to one another,
- seat unit fixing means (36), each of them being provided in a portion (37) of the body (28), each of the seat unit fixing means (36) enabling to fix the body (28) and an element of the seat unit (15) to one another,
- the portions (32) of the body (28) comprising the lock fixing means (31.1, 31.2, 31.3) and the portions (37) of the body (28) comprising the seat unit fixing means (36), as well as the remainder of the body (28) forming a single monobloc part,
- said support pallet further comprising stiffening ribs (39) on the lower face (29.2) of the body (28),
- the upper face (29.1) of the body (28) being smooth, **characterized in that**
- the stiffening ribs (39) extend along stress paths between the lock fixing means (31.1, 31.2, 31.3) appearing during a dynamic mechanical resistance test consisting of a deformation of the aircraft floor while the support pallet (23) is mounted on rails (21.1, 21.2) and during which a stress is imparted to one of the rails (21.1, 21.2) so as to make it descend by an angle of 10 degrees downwards and another stress is imparted to the other rail (21.1, 21.2) so as to make it pivot by an angle of 10 degrees.

2. The support pallet according to claim 1, **characterized in that** it comprises three lock fixing means (31.1, 31.2, 31.3).

3. The support pallet according to claim 2, **characterized in that** it comprises a first lock fixing means (31.1) and a second lock fixing means (31.2) on a first side of the body (28) and a third lock fixing means (31.3) on a second side of the body (28).

4. The support pallet according to claim 3, **characterized in that** the third lock fixing means (31.3) is longitudinally offset with respect to a first straight line (D1) perpendicular to a longitudinal direction through the first lock fixing means (31.1) and with respect to a second straight line (D2) perpendicular to a longitudinal direction through the second lock fixing means (31.2), so that the third lock fixing means (31.3) is located longitudinally between the first lock fixing means (31.1) and the second lock fixing means (31.2).

5. The support pallet according to any of the claims 1 to 4, **characterized in that** at least one through recess (40) is provided in the body (28).

6. The support pallet according to any of the claims 1 to 5, **characterized in that** the upper face (29.1) of the body (28) comprises indexing zones (42) for facilitating the positioning of an element of the seat unit relative to the seat unit fixing means (36).

7. The support pallet according to any of the claims 1 to 6, **characterized in that** the single monobloc part is made of a metallic material, in particular aluminum.

8. An assembly comprising at least one seat unit (15) and a support pallet (23) for a seat unit as defined according to any of the preceding claims.

9. An aircraft comprising an assembly as defined according to the preceding claim.
